(19)

Europäisches
Patentamt
European
Patent Office
Office européen
des brevets

(11) **EP 1 578 029 B1**

(12) **EUROPEAN PATENT SPECIFICATION**

(45) Date of publication and mention
of the grant of the patent:
**22.10.2008 Bulletin 2008/43**

(51) Int Cl.:
***H04B 7/005*** (2006.01)

(21) Application number: **05103710.9**

(22) Date of filing: **22.03.2000**

(54) **Outer loop/weighted open loop power control in a time division duplex communication system**

Leistungsregelung mit äusserer Schleife/gewichteter offener Schleife in einem Zeitduplex-Kommunikationssystem

Commande de puissance en boucle externe/boucle ouverte pondérée dans un système de communication duplex à répartition dans le temps

(84) Designated Contracting States:
**AT BE CH CY DE DK ES FI FR GB GR IE IT LI LU MC NL PT SE**

(30) Priority: **22.03.1999 US 125417 P**
**28.05.1999 US 136556 P**
**28.05.1999 US 136557 P**

(43) Date of publication of application:
**21.09.2005 Bulletin 2005/38**

(62) Document number(s) of the earlier application(s) in accordance with Art. 76 EPC:
**03019004.5 / 1 367 740**
**00916600.0 / 1 163 735**

(73) Proprietor: **INTERDIGITAL TECHNOLOGY CORPORATION**
**Wilmington, DE 19801 (US)**

(72) Inventors:
• **Zeira, Ariela**
**Trumball,**
**Connecticut 06611 (US)**
• **Shin, Sung-Hyuk**
**Fort Lee,**
**New Jersey 07024 (US)**
• **Dick, Stephen G.**
**Nesconcet,**
**New York 11767 (US)**

(74) Representative: **Mattsson, Niklas et al**
**Awapatent AB**
**P.O. Box 45086**
**104 30 Stockholm (SE)**

(56) References cited:
**EP-A- 0 462 952**         **EP-A- 0 682 419**
**EP-A2- 0 610 030**        **WO-A-97/49197**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND**

This invention generally relates to spread spectrum time division duplex (TDD) communication systems. More particularly, the present invention relates to a spread spectrum time division duplex comprising means base station for controlling transmission power.

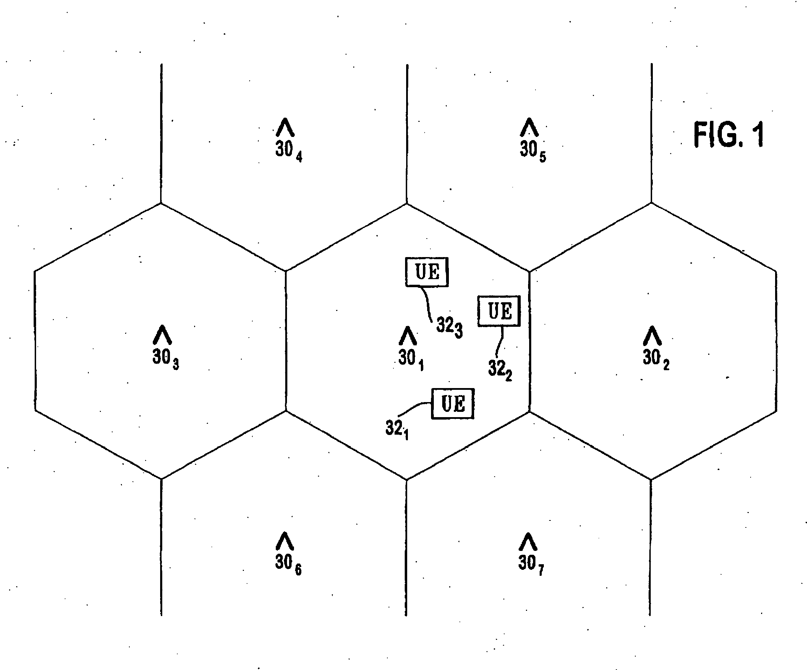

Figure 1 depicts a wireless spread spectrum time division duplex (TDD) communication system The system has a plurality of base stations $30_1$-$30_7$. Each base station $30_1$ communicates with user equipment (UEs) $32_1$-$37_3$ in its operating area. Communications transmitted from a base station $30_1$ to a UE $32_1$ are referred to as downlink communications and communications transmitted from a UE $32_1$ to a base station $30_1$ are referred to as uplink communications.

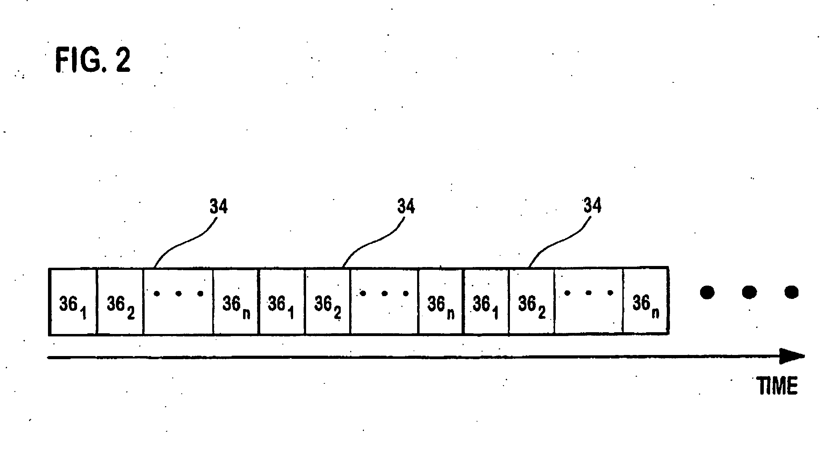

In addition to communicating over different frequency spectrums, spread spectrum TDD systems carry multiple communications over the same spectrum. The multiple signals are distinguished by their respective chip code sequences (codes). Also, to more efficiently use the spread spectrum, TDD systems as illustrated in Figure 2 use repeating frames 34 divided into a number of time slots $36_1$-$36_n$, such as sixteen time slots. In such systems, a communication is sent in selected time slots $36_1$-$36_n$ using selected codes. Accordingly, one frame 34 is capable of currying multiple communications distinguished by both time slot and code. The combination of a single code in a single time slot is referred to as a resource unit. Based on the bandwidth required to support a communication, one or multiple resource units are assigned to that communication.

Most TDD systems adaptively control transmission power levels. In a TDD system, many communications may share the same time slot and spectrum. When a UE $32_1$ or base station $30_1$ is receiving a specific communication, all the other communications using the same time slot and spectrum cause interference to the specific communication. Increasing the transmission power level of one communication degrades the signal quality of all other communications within that time slot and spectrum. However, reducing the transmission power level too far results in undesirable signal to noise ratios (SNRs) and bit error rates (BERs) at the receivers. To maintain both the signal quality of communications and low transmission power levels, transmission power control is used.

One approach using transmission power control in a code division multiple access (CDMA) communication system is described in U.S. Patent No. 5,056.109 (Gilhousen et al.). A transmitter sends a communication to a particular receiver. Upon reception, the received signal power is measured. The received signal power is compared to a desired received signal power. Based on the comparison, a control bit is sent to the transmitter either increasing or decreasing transmission power by a fixed amount. Since the receiver sends a control signal to the transmitter to control the transmitter's power level, such power control techniques are commonly referred to as closed loop.

The European patent application having publication n° 0 462 952 relates to a method of regulating of adjusting the transmission power when transmitting signals between a mobile station and a base station in a digital mobile telephony system. The output power is regulated with the intention of constantly maintaining the transmission power at an optimum level, by which is meant that the transmission power is as low as possible such as to prevent unnecessary disturbance of neighbouring channels transmitting information on the same frequency, but sufficiently high for the transmitted information to be interpreted in the receiver.

International patent application WO 97/49197 discloses, in packet switched data transfer of a cellular radio system, closed-loop control as well as open-loop control of transmission power. Before forming a connection and during long pauses between the packets, a terminal device measures a control signal transmitted by a base station and compares its signal power terminal device that is included by the base station in the control signal as a parameter. The base station informs of the transmission power in the control signal, whereby the terminal device sets the same power to be its transmission power, corrected by the difference between the target level and a measured quality of the link.

Under certain conditions, the performance of closed loop systems degrades. For instance, if communications sent between a UE and a base station are in a highly dynamic environment, such as due to the UE moving, such systems may not be able to adapt fast enough to compensate for the changes. The update rate of closed loop power control in TDD is typically 100 cycles per second which is not sufficient for fast fading channels. Accordingly, there is a need for alternate approaches to maintain signal quality and low transmission power levels.

**SUMMARY**

Outer loop/weighted open loop power control controls transmission power levels in a spread spectrum time division duplex communication system. For the base station this is achieved with the subject-matter of claim 1.

**BRIEF DESCRIPTION OF THE DRAWINGS**

**Figure 1** illustrates a prior art TDD system

**Figure 2** illustrates time slots in repeating frames of a TDD system

**Figure 3** is a flow chart of outer loop/weighted open loop power control.

**Figure 4** is a diagram of components of two communication stations using outer loop/weighted open loop power control.

**Figure 5** is a graph of the performance of outer loop/weighted open loop, weighted open loop and closed loop power control systems.

**Figure 6** is a graph of the three systems performance in terms of Block Error Rate (BLER).

## DETAILED DESCRIPTION OF THE PREFERRED EMBODIMENTS

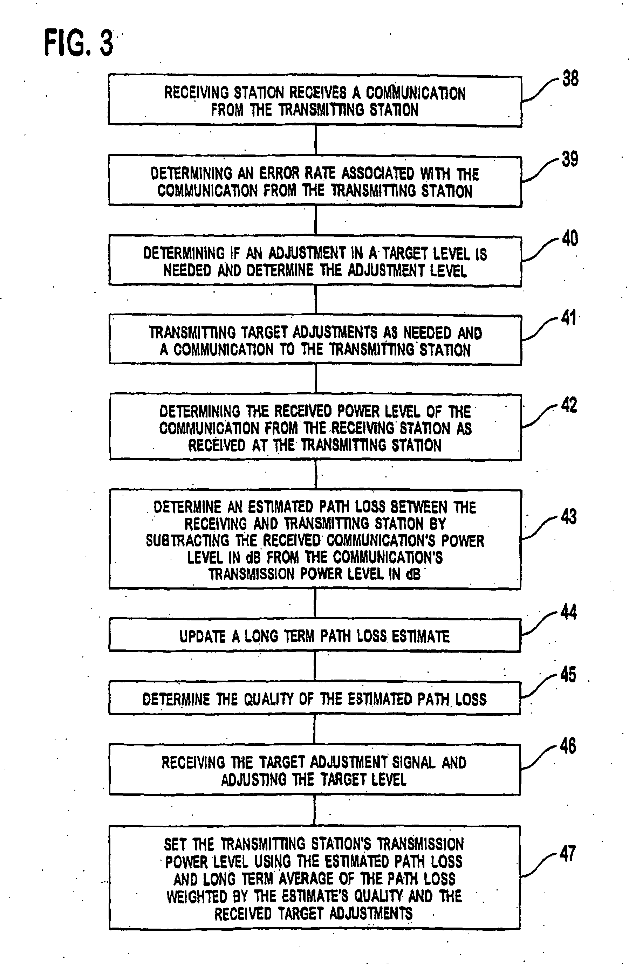

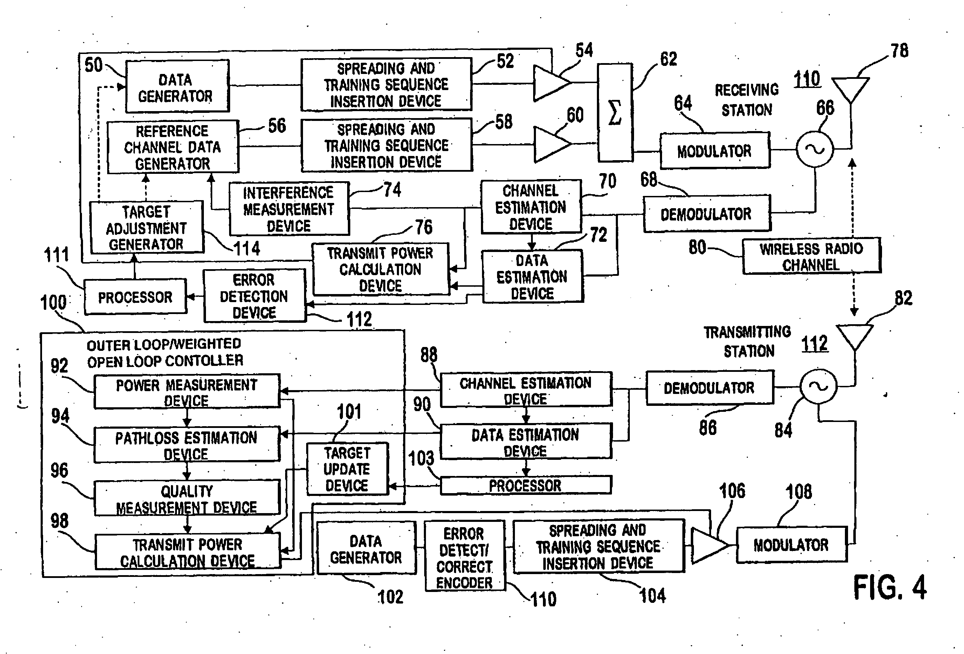

The preferred embodiments will be described with reference to the drawing figures where like numerals represent like elements throughout. Outer loop/weighted open loop power control will be explained using the flow chart of **Figure 3** and the components of two simplified communication stations **110, 112** as shown in **Figure 4.** For the following discussion, the communication station having its transmitter's power controlled is referred to as the transmitting station **112** and the communication station receiving power controlled communications is referred to as the receiving station **110.** Since outer loop/weighted open loop power control may be used for uplink, downlink or both types of communications, the transmitter having its power controlled may be associated with the base station $30_1$, UE $32_1$ or both. Accordingly, if both uplink and downlink power control are used, the receiving and transmitting station's components are associated with both the base station $30_1$ and UE $32_1$.

The receiving station **110** receives various radio frequency signals including communications from the transmitting station **112** using an antenna **78,** or alternately, an antenna array, step **38.** The received signals are passed thorough an isolator **66** to a demodulator **68** to produce a baseband signal. The baseband signal is processed, such as by a channel estimation device **70** and a data estimation device **72,** in the time slots and with the appropriate codes assigned to the transmitting , station's communication. The channel estimation device **70** commonly uses the training sequence component in the baseband signal to provide channel information, such as channel impulse responses. The channel information is used by the data estimation device **72,** the interference measurement device **74,** and the transmit power calculation device **76.** The data estimation device **72** recovers data from the channel by estimating soft symbols using the channel information.

Prior to transmission of the communication from the transmitting station **112,** the data signal of the communication is error encoded using an error detection/correction encoder **110.** The error encoding scheme is typically a circular redundancy code (CRC) followed by a forward error correction encoding, although other types of error encoding schemes may be used.

Using the soft symbols produced by the data estimation device **72,** an error detection device **112** detects errors in the soft symbols. A processor **111** analyzes the detected error and determines an error rate for the received communication, step 39. Based on the error rate, the processor **111** determines the amount, if any, a target level, such as a target signal to interference ration ($SIR_{TARGET}$), needs to be changed at the transmitting station **112,** step **40.** Based on the determined amount, a target adjustment signal is generated by the target adjustment generator **114.** The target adjustment is subsequently sent to the transmitting station, step **41.** The target adjustment is signaled to the transmitting station **112,** such as using a dedicated or a reference channel as shown in **Figure 4,** step **41.**

One technique to determine the amount of adjustment in the target level uses an upper and lower threshold. If the determined error rate exceeds an upper threshold, the target level is set at an unacceptably low level and needs to be increased. A target level adjustment signal is sent indicating an increase in the target level. If the determined error rate is below a second threshold, the target level is set at an unnecessarily high level and the target level can be decreased. By reducing the target level, the transmitting station's power level is decreased reducing interference to other communications using the same time slot and spectrum. To improve performance, as soon as the error rate exceeds the upper limit, a target adjustment is sent. As a result, high error rates are improved quickly and lower error rates are adjusted slowly, such as once per 10 seconds. If the error rate is between the thresholds, a target adjustment is not sent maintaining the same target level.

Applying the above technique to a system using CRC and FEC encoding follows. Each CRC block is checked for an error. Each time a frame is determined to have an error, a counter is incremented. As soon as the counter exceeds an upper threshold, such as 1.5 to 2 times the desired block error rate (BLER), a target adjustment is sent increasing the target level.. To adjust the $SIR_{TARGET}$ at the transmitting station **112,** the increase in the $SIR_{TARGET}$ is sent ($SIR_{INC}$), which is typically in a range of 0.25 dB to 4 dB. If the number of CRC frames encountered exceeds a predetermined limit, such as 1000 block, the value of the counter is compared to a lower threshold, such as 0.2 to 0.6 times the desired BLER. If the number of counted block errors is below the lower threshold, a target adjustment signal is sent decreasing the target level, $SIR_{DEC}$- A typical range of $SIR_{DEC}$ is 0.25 to 4 dB. The value of $SIR_{DEC}$ may be based on $SIR_{INC}$ and a target block error rate, $BLER_{TARGET}$. The $BLER_{TARGET}$ is based on the type of service. A typical range for the BLER$_{TARGER}$ is 0.1% to 10%. **Equation 1** illustrates one such approach for determining SIR$_{DEC}$.

$$SIR_{DEC} = SIR_{INC} \times BLER_{TARGET}/(1 - BLER_{TARGET}) \qquad \text{Equation 1}$$

If the count is between the thresholds for the predetermines block limit, a target adjustment signal is not sent.

Alternately, a single threshold may be used If the error rate exceeds the threshold, the target level is increased. If the error rate is below the threshold, the target is decreased. Additionally, the target level adjustment signal may have several adjustment levels, such as from 0 dB to $\pm 4$ dB in 0.25 dB increments based on the difference between the determined error rate and the desired error rate.

The interference measurement device **74** of the receiving station **110** determines the interference level in dB, I$_{RS}$, within the channel, based on either the channel information, or the soft symbols generated by the data estimation device **72,** or both. Using the soft symbols and channel information, the transmit power calculation device **76** controls the receiving station's transmission power level by controlling the gain of an amplifier **54.**

For use in estimating the pathloss between the receiving and transmitting stations **110,112** and sending data, the receiving station **110** sends a communication to the transmitting station **112,** step **41.** The communication may be sent on any one of the various channels. Typically, in a TDD system, the channels used for estimating pathloss are referred to as reference channels, although other channels may be used. If the receiving station **110** is a base station **30$_1$,** the communication is preferably sent over a downlink common channel or a common control physical channel (CCPCH). Data to be communicated to the transmitting station **112** over the reference channel is referred to as reference channel data. The reference data may include, as shown, the interference level, I$_{RS}$, multiplexed with other reference data, such as the transmission power level, T$_{RS}$. The interference level, I$_{RS}$, and reference channel power level, I$_{RS}$, may be sent in other channels, such as a signaling channel.

The reference channel data is generated by a reference channel data generator 56. The reference data is assigned one or multiple resource units based on the communication's' bandwidth requirements. A spreading and training sequence insertion device **58** spreads the reference channel data and makes the spread reference data time-multiplexed with a training sequence in the appropriate time slots and codes of the assigned resource units. The resulting sequence is referred to as a communication burst. The communication burst is subsequently amplified by an amplifier 60. The amplified communication burst may be summed by a sum device 62 with any other communication burst created through devices, such as a data generator 50, spreading and training sequence insertion device **52** and amplifier **54.**

The summed communication bursts are modulated by a modulator **64.** The modulated signal is passed thorough an isolator **66** and radiated by an antenna **78** as shown or, alternately, through an antenna array. The radiated signal is passed through a wireless radio channel **80** to an antenna **82** of the transmitting station **112.** The type of modulation used for the transmitted communication can be any of those known to those skilled in the art, such as direct phase shift keying (DPSK) or quadrature phase shift keying (QPSK).

The antenna **82** or, alternately, antenna array of the transmitting station **112** receives various radio frequency signals including the target adjustments. The received signals are passed through an isolator **84** to a demodulator **86** to produce a baseband signal. The baseband signal is processed, such as by a channel estimation device **88** and a data estimation device **90,** in the time slots and with the appropriate codes assigned to the communication burst of the receiving station **110.** The channel estimation device **88** commonly uses the training sequence component in the baseband signal to provide channel information, such as channel impulse responses. The channel information is used by the data estimation device **90** and a power measurement device **92.**

The power level of the processed communication corresponding to the reference channel, R$_{TS}$, is measured by the power measurement device **92** and sent to a pathloss estimation device **94,** step **42.** Both the channel estimation device **88** and the data estimation device **90** are capable of separating the reference channel from all other channels. If an automatic gain control device or amplifier is used for processing the received signals, the measured power level is adjusted to correct for the gain of these devices at either the power measurement device **92** or pathloss estimation device **94.** The power measurement device is a component of an outer loop/weighted open loop controller **100.** As shown in **Figure 4,** the outer loop/weighted open loop controller **100** comprises the power measurement device **92,** pathloss estimation device **94,** quality measurement device **94,** target update device **101,** and transmit power calculation device **98.**

To determine the path loss, L, the transmitting station **112** also requires the communication's transmitted power level, T$_{RS}$. The communication's transmitted power level, T$_{RS}$, may be sent along with the communication's data or in a signaling channel. If the power level, T$_{RS}$, is sent along with the communication's data, the data estimation device **90** interprets the power level and sends the interpreted power level to the pathloss estimation device **94.** If the receiving station **110** is a base station 30$_1$, preferably the transmitted power level, T$_{RS}$, is sent via the broadcast channel (BCH) from the base station **30$_1$.** By subtracting the received communication's power level, R$_{TS}$, from the sent communication's transmitted power level, T$_{RS}$, the pathloss estimation device **94** estimates the path loss, L, between the two stations **110,112,** step **43.** Additionally, a long term average of the pathloss, $L_0$, is updated, step **44.** The long term average of the pathloss, $L_0$, is an average of the pathloss estimates. In certain situations, instead of transmitting the transmitted power level, $T_{RS}$, the receiving station **110** may transmit a reference for the transmitted power level. In that case, the pathloss estimation device 94 provides reference levels for the pathloss, L.

Since TDD systems transmit downlink and uplink communications in the same frequency spectrum, the conditions these communications experience are similar. This phenomenon is referred to as reciprocity. Due to reciprocity, the path loss experienced for the downlink will also be experienced for the uplink and vice versa. By adding the estimated path loss to a target level, a transmission power level for a communication from the transmitting station **112** to the receiving station **110** is determined.

If a time delay exists between the estimated path loss and the transmitted communication, the path loss experienced by the transmitted communication may differ from the calculated loss. In TDD where communications are sent in differing time slots $36_1$-$36_n$, the time slot delay between received and transmitted communications may degrade the performance of an open loop power control system. To overcome these drawbacks, weighted open loop power control determines the quality of the estimated path loss using a quality measurement device 96, step **45,** and weights the estimated path loss accordingly, L, and long terms average of the pathloss, $L_0$.

To enhance performance further in outer loop/weighted open loop, a target level is adjusted. A processor **103** converts the soft symbols produced by the data estimation device **90** to bits and extracts the target adjustment information, such as a $SIR_{TARGET}$ adjustment. A target update device **101** adjusts the target level using the target adjustments, step **46.** The target level may be a $SIR_{TARGET}$ or a target received power level at the receiving station **110.**

The transmit power calculation device **98** combines the adjusted target level with the weighted path loss estimate, L, and long term average of the pathloss estimate, $L_0$, to determine the transmission power level of the transmitting station, step **47.**

Data to be transmitted in a communication from the transmitting station **112** is produced by data generator **102.** The data is error detection/correction encoded by error detection/correction encoder **110.** The error encoded data is spread and time-multiplexed with a training sequence by the training sequence insertion device **104** in the appropriate time slots and codes of the assigned resource units producing a communication burst. The spread signal is amplified by an amplifier **106** and modulated by modulator **108** to radio frequency. The gain of the amplifier is controlled by the transmit power calculation device **98** to achieve the determined transmission power level. The power controlled communication burst is passed through the isolator **84** and radiated by the antenna **82.**

The following is one outer loop/weighted open loop power control algorithm. The transmitting stations's transmission power level in decibels, $P_{TS}$, is determined using **Equation 2.**

$$P_{TS} = SIR_{TARGET} + I_{RS} + \alpha(L\text{-}L_0) + L_0 + CONSTANT\ VALUE \quad \text{Equation 2}$$

The $SIR_{TARGET}$ has an adjusted value based on the received target adjustment signals. For the downlink, the initial value of $SIR_{TARGET}$ is known at the transmitting station **112.** For uplink power control, $SIR_{TARGET}$ is signaled from the receiving station **110** to the transmitting station **112.** Additionally, a maximum and minimum value for an adjusted $SIR_{TARGET}$ may also be signaled. The adjusted $SIR_{TARGET}$ is limited to the maximum and minimum values. $I_{RS}$ is the measure of the interference power level at the receiving station **110.**

L is the path loss estimate in decibels, $T_{RS}$ - $R_{TS}$, for the most recent time slot $36_1$-$36_n$ that the path loss was estimated. $L_0$, the long term average of the path loss in decibels, is the running average of the pathloss estimate, L. The CONSTANT VALUE is a correction term. The CONSTANT VALUE corrects for differences in the uplink and downlink channels, such as to compensate for differences in uplink and downlink gain. Additionally, the CONSTANT VALUE may provide correction if the transmit power reference level of the receiving station is transmitted, instead of the actual transmit power, $T_{RS}$. If the receiving station **110** is a base station; the CONSTANT VALUE is preferably sent via a Layer 3 message.

The weighting value, a, is a measure of the quality of the estimated path loss and is, preferably, based on the number of time slots $36_1$-$36_n$ between the time slot, n, of the last path loss estimate and the first time slot of the communication transmitted by the transmitting station **112.** The value of a is between zero and one. Generally, if the time difference between the time slots is small, the recent path loss estimate will be fairly accurate and a is set at a value close to one. By contrast, if the time difference is large, the path loss estimate may not be accurate and the long term average path loss measurement is most likely a better estimate for the path loss. Accordingly, a is set at a value closer to one.

**Equations 3** and **4** are equations for determining $\alpha$.

$$\alpha = 1 - (D - 1)/(D_{max} - 1) \qquad\qquad \textbf{Equation 3}$$

$$\alpha = max\ \{1 - (D-1)/(D_{max\text{-}allowed} - 1),\ 0\} \qquad \textbf{Equation 4}$$

The value, D, is the number of time slots $36_1$-$36_n$ between the time slot of the last path loss estimate and the first time slot of the transmitted communication which will be referred to as the time slot delay. If the delay is one time slot, a is one. $D_{max}$ is the maximum possible delay. A typical value for a frame having fifteen time slots is seven. If the delay is $D_{max}$, $\alpha$ is zero $D_{max\text{-}allowed}$ is the maximum allowed time slot delay for using open loop power control. If the delay exceeds $D_{max\text{-}allowed}$, open loop power control is effectively turned off by setting a = 0. Using the transmit power level, $P_{TS}$, determined by a transmit power calculation device 98 the transmit power of the transmitted communication is set.

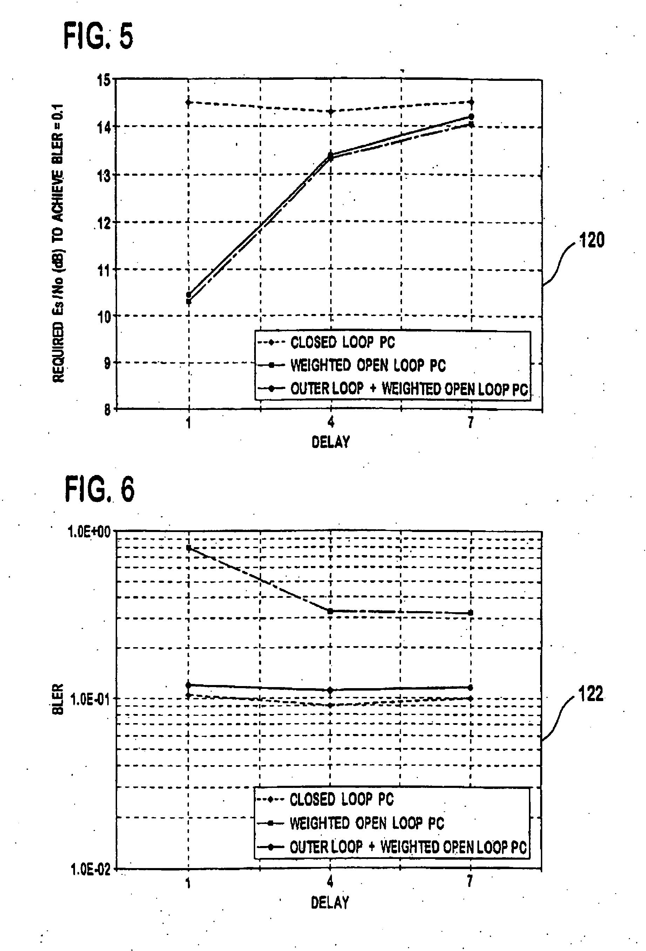

**Figures 5** and **6** compare the performance of the weighted outer loop/open loop, open loop and closed loop systems. The simulations in **Figures 5** and 6 were performed for a slightly different version of the outer loop/weighted open loop algorithm In this version, the target SIR is updated every block. A $SIR_{TARGET}$ is increased if a block error was detected and decreased if no block error was detected. The outer loop/weighted open loop system used Equation 2. Equation 3 was used to calculate a. The simulations compared the performance of the systems controlling a UE's $32_1$ transmission power level. For the simulations, 16 CRC bits were padded every block. In the simulation, each block was 4 frames. A block error was declared when at least two raw bit errors occur over a block. The uplink communication channel is assigned one time slot per frame. The target for the block error rate is 10%. The $SIR_{TARGET}$ is updated every 4 frames. The simulations address the performance of these systems for a **UE $32_1$** traveling at 30 kilometers per hour. The simulated base station used two antenna diversity for reception with each antenna having a three finger RAKE receiver. The simulation approximated a realistic channel and SIR estimation based on a midamble sequence of burst type 1 field in the presence of additive white Gaussian noise (AWGN). The simulation used an International Telecommunication Union (ITU) Pedestrian B type channel and QPSK modulation. Interference levels were assumed to have no uncertainty. Channel coding schemes were not considered. $L_0$ was set at 0 db.

Graph **120** of **Figure 5** shows the performance as expected in terms of the required $E_s/N_o$ for a BLER of $10^{-1}$ as a function of time delay between the uplink time slot and the most recent downlink time slot. The delay is expressed by the number of time slots. $E_s$ is the energy of the complex symbol. **Figure 5** demonstrates that, when gain/interference uncertainties are ignored, the performance of the combined system is almost identical to that of weighted open loop system. The combined system outperforms the closed loop system for all delays.

In the presence of gain and interference uncertainties, the transmitted power level of the open loop system is either too high or too low of the nominal value. In graph **122** of **Figure 6,** a gain uncertainty of -2 dB was used. **Figure 6** shows the BLER as a function of the delay. The initial reference $SIR_{TARGET}$ for each system was set to its corresponding nominal value obtained from **Figure 5,** in order to achieve a BLER of $10^{-1}$. **Figure 6** shows that, in the presence of gain uncertainty, both the combined and closed loop systems achieve the desired BLER. The performance of the weighted open loop system severely degrades.

**Claims**

1. A spread spectrum time division duplex base station communicating using frames with time slots for communication, the base station comprising:

> means (82, 88) for receiving, in a first time slot, a first communication having a transmit power level and for receiving the transmit power level, an interference level and target adjustments from a user equipment
> means (92) for measuring a power level of said first communication;
> means (94) for determining a path loss estimate based in part on said measured power level and said transmit power level of said first communication;
> means (108, 82) for transmitting a second communication in a second time slot at a set transmission power level to the u.e.; the base station being **characterized in that** it comprises:

> > means (101) for updating a target signal to interference ratio based on the received target adjustments;
> > means (96, 98,106) for setting the transmission power level for transmission of the second communication in the second time slot by adding the path loss estimate weighted by a first factor $\alpha$, having a value between zero and one, and a long term path loss estimate weighted by a second factor (1- $\alpha$) to the interference

level, to the updated target signal to interference ratio and to a constant value, $\alpha$ being a quality of the determined path loss estimate.

2. The base station of claim 1 further comprising:

means (94) for determining the long term path loss estimate based at least in part upon an average of path loss estimates of communications received.

3. The base station of claim 2 further comprising:

means (96) for determining the quality, $\alpha$, of the Path loss estimate which is based in part on a number of slots, D, between the first and second time slot.

4. The base station of claim 3, wherein a maximum time slot delay is $D_{max}$ and $\alpha$ is determined by:

$$\alpha = 1 - (D - 1)/(D_{max} - 1).$$

5. The base station of claim 3, wherein maximum allowed time slot delay $D_{max\text{-}allowed}$ and the determined quality, $\alpha$, is determined by:

$$\alpha = max\ \{1 - (D-1)/(D_{max\text{-}allowed} - 1),\ 0\}.$$

**Patentansprüche**

1. Spreizspektrum-Zeitteilungsduplex-Basisstation, die unter Verwendung von Rahmen mit zeitschlitzen für die Kommunikation kommuniziert, wobei die Basisstation aufweist:

Einrichtungen (82, 88) zum Empfangen, in einem ersten Zeitschlitz, einer ersten Kommunikation mit einem Sendeleistungspegel und zum Empfangen des Sendeleistungspegels, eines Interferenzpegels und von Zieleinstellungen von einem Benutzergerät;
Einrichtungen (92) zum Messen eines Leistungspegels der ersten Kommunikation;
Einrichtungen (94) zum Bestimmen einer Funkfelddämpfungsschätzung teilweise basierend auf dem gemessenen Leistungspegel und dem Sendeleistungspegel der ersten Kommunikation;
Einrichtungen (108; 82) zum Senden einer zweiten Kommunikation in einem zweiten Zeitschlitz bei einem festgelegten Sendeleistungspegel an das Benutzergerät; wobei die Basisstation **dadurch gekennzeichnet ist, dass** sie aufweist:

Einrichtungen (101) zum Aktualisierten eines Ziel-Signal-Interferenz-Verhältnisses basierend auf den empfangenen zieleinstellungen;
Einrichtungen (96, 98, 106) zum Festlegen des Sendeleistungspegels für die Übertragung der zweiten Kommunikation in dem zweiten Zeitschlitz durch Hinzufügen der mit einem ersten Faktor $\alpha$, welcher einen Wert zwischen null und eins hat, gewichteten Funkfelddämpfungsschätzung und einer mit einem zweiten Faktor $(1 - \alpha)$ gewichteten langfristigen Funkfelddämpfungsschätzung zu dem Interferenzpegel, zu dem aktualisierten Ziel-Signal-Interferenz-Verhältnis und zu einem konstanten Wert, wobei $\alpha$ eine Qualität der bestimmten Funkfelddämpfungsschätzung ist.

2. Basisstation nach Anspruch 1, die ferner aufweist:

Einrichtungen (94) zum Bestimmen der langfristigen Funkfelddämpfungsschätzung zumindest teilweise nach mittleren Funkfelddämpfungsschätzungen empfangener Kommunikationen.

**3.** Basisstation nach Anspruch 2, die ferner aufweist:

Einrichtungen (96) zum Bestimmen der Qualität $\alpha$ der Funkfelddämpfungsschätzung, die teilweise auf einer Anzahl von Schlitzen D zwischen dem ersten und zweiten Schlitz basiert.

**4.** Basisstation nach Anspruch 3, wobei eine maximale Zeitschlitzverzögerung $D_{max}$ und $\alpha$ bestimmt sind durch:

$$\alpha = 1 - (D - 1)/(D_{max} - 1)$$

**5.** Basisstation nach Anspruch 3, wobei die maximal zulässige zeitschlitzverzögerung $D_{max\text{-}zulässig}$ und die bestimmte Qualität bestimmt sind durch:

$$\alpha = max\{1 - (D - 1)/(D_{max\text{-}zulässig} - 1), 0\}.$$

## Revendications

**1.** Station de base duplex à répartition dans le temps à étalement du spectre communiquant en utilisant des trames avec des tranches de temps pour la communication, la station de base comprenant :

des moyens (82, 88) pour recevoir, dans une première tranche de temps, une première communication ayant un niveau de puissance d'émission et pour recevoir le niveau de puissance d'émission, un niveau d'interférence et des réglages cibles en provenance d'un équipement utilisateur ;
des moyens (92) pour mesurer un niveau de puissance de ladite première communication ;
des moyens (94) pour déterminer une estimation d'affaiblissement de trajet basée en partie sur ledit niveau de puissance mesuré et ledit niveau de puissance d'émission de ladite première communication ;
des moyens (108, 82) pour transmettre une seconde communication dans une seconde tranche de temps à un niveau de puissance de transmission établi à l'équipement utilisateur ; la station de base étant **caractérisée en ce qu'**elle comprend :

des moyens (101) pour mettre à jour un rapport signal sur interférence cible basé sur les réglages cibles reçus ;
des moyens (96, 98, 106) pour établir le niveau de puissance de transmission pour la transmission de la seconde communication dans la seconde tranche de temps en ajoutant l'estimation d'affaiblissement de trajet pondérée par un premier facteur $\alpha$, ayant une valeur comprise entre zéro et un, et une estimation d'affaiblissement de trajet à long terme pondérée par un second facteur $(1-\alpha)$ au niveau d'interférence, au rapport signal sur interférence cible mis à jour et à une valeur constante, $\alpha$, qui est une qualité de l'estimation d'affaiblissement de trajet déterminée.

**2.** Station de base selon la revendication 1, comprenant en outré :

des moyens (94) pour déterminer l'estimation d'affaiblissement de trajet à long terme basée au moins en partie sur une moyenne d'estimations d'affaiblissement de trajet de communications reçues.

**3.** Station de base selon la revendication 2, comprenant en outre :

des moyens (96) pour déterminer la qualité, $\alpha$, de l'estimation d'affaiblissement de trajet qui est basée en partie sur un nombre de tranches, D, entre la première et la seconde tranche de temps.

**4.** Station de base selon la revendication 3, dans laquelle un délai de tranche de temps maximum est $D_{max}$ et $\alpha$ est déterminée par :

$$\alpha \;=\; 1 - (D-1) / (D_{max} - 1)$$

5. Station de base selon la revendication 3, dans laquelle le délai de tranche de temps maximum autorisé est $D_{max-allowed}$ et la qualité déterminée, $\alpha$, est déterminée par :

$$\alpha \;=\; \max\{1 - (D-1) / (D_{max-allowed} - 1),\; 0\}$$

FIG. 1

# FIG. 2

# FIG. 3

RECEIVING STATION RECEIVES A COMMUNICATION FROM THE TRANSMITTING STATION — 38

DETERMINING AN ERROR RATE ASSOCIATED WITH THE COMMUNICATION FROM THE TRANSMITTING STATION — 39

DETERMINING IF AN ADJUSTMENT IN A TARGET LEVEL IS NEEDED AND DETERMINE THE ADJUSTMENT LEVEL — 40

TRANSMITTING TARGET ADJUSTMENTS AS NEEDED AND A COMMUNICATION TO THE TRANSMITTING STATION — 41

DETERMINING THE RECEIVED POWER LEVEL OF THE COMMUNICATION FROM THE RECEIVING STATION AS RECEIVED AT THE TRANSMITTING STATION — 42

DETERMINE AN ESTIMATED PATH LOSS BETWEEN THE RECEIVING AND TRANSMITTING STATION BY SUBTRACTING THE RECEIVED COMMUNICATION'S POWER LEVEL IN dB FROM THE COMMUNICATION'S TRANSMISSION POWER LEVEL IN dB — 43

UPDATE A LONG TERM PATH LOSS ESTIMATE — 44

DETERMINE THE QUALITY OF THE ESTIMATED PATH LOSS — 45

RECEIVING THE TARGET ADJUSTMENT SIGNAL AND ADJUSTING THE TARGET LEVEL — 46

SET THE TRANSMITTING STATION'S TRANSMISSION POWER LEVEL USING THE ESTIMATED PATH LOSS AND LONG TERM AVERAGE OF THE PATH LOSS WEIGHTED BY THE ESTIMATE'S QUALITY AND THE RECEIVED TARGET ADJUSTMENTS — 47

FIG. 4

## FIG. 5

## FIG. 6

**EP 1 578 029 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5056109 A
- EP 0462952 A
- WO 9749197 A